# EUROPEAN PATENT SPECIFICATION

(11) **EP 1 876 916 B1**
(45) Date of publication and mention of the grant of the patent: **05.12.2012**
(21) Application number: 06744836.5
(22) Date of filing: 28.04.2006
(51) Int. Cl.: A23L 3/365, A23L 3/37

(54) **PRODUCT**
PRODUKT
PRODUIT

(30) Priority: 29.04.2005 GB 0508865; 29.04.2005 US 675879 P
(43) Date of publication of application: 16.01.2008
(73) Proprietor: DuPont Nutrition Biosciences ApS, 1001 Copenhagen K. (DK)
(72) Inventor: Kragh, Henrik, 6000 Kolding (DK); Nielsen, Jens Mogens, 8464 Galten (DK)
(74) Representative: Alcock, David
(86) International application number: PCT/IB2006/001609
(87) International publication number: WO 2006/117687

(56) References cited:
- EP-A- 0 848 912
- US-A- 6 068 876
- US-A1- 2004 058 037
- PITZALIS P ET AL: "CHARACTERIZATION OF THE LIQUID-CRYSTALLINE PHASES IN THE GLYCEROL MONOOLEATE/DIGLYCEROL MONOOLEATE/WATER SYSTEM" LANGMUIR, ACS, WASHINGTON, DC, US, vol. 16, no. 15, 2000, pages 6358-6365, XP001113070 ISSN: 0743-7463
- PATENT ABSTRACTS OF JAPAN vol. 012, no. 275 (C-516), 29 July 1988 (1988-07-29) & JP 63 056259 A (ASAHI DENKA KOGYO KK), 10 March 1988 (1988-03-10)

## Description

The present invention relates to use of such a composition in preparing a freeze-protected foodstuff.

Freezing is a very common technique for preserving food. With certain notable exceptions, frozen food is usually thawed prior to use or further processing (e.g., cooking). Thawing is accomplished satisfactorily by leaving the frozen foodstuff to stand at ambient temperature. However, even on a domestic scale, the length of time taken to accomplish satisfactory thawing is considerable. Thawing is also accomplished on an industrial scale by the application of conductive or convective heat to the frozen foodstuff. However, the apparatus needed to accomplish such thawing is not readily available to the consumer.

Microwave ovens are increasingly widespread in both an industrial and domestic context. One of their uses is in the thawing of frozen food. Microwave thawing is more rapid than thawing at ambient temperature. It still suffers from a number of disadvantages:
- the low thermal diffusivity of frozen food necessitates the use of pulsed microwaves to allow temperature equilibrium to be established;
- liquid water absorbs microwave energy much more readily than ice, tending to result in "hotspots" and uneven thawing;
- the geometry of the food item with regard to size and shape must be suitable;
- because of the necessity of using only intermittent microwave pulses, the time to thaw a food item completely is considerable.

Previous work has been directed towards overcoming some of these problems. WO98/2667 discloses an edible water-in-oil micro-emulsion for thawing of a food product, which, when at a temperature below 0 °C comprises water in super cooled state and when subjected to microwave energy at a temperatures below 0°C acts as a microwave energy absorber.

A problem that persists is to provide compositions for the treatment of food products so that they thaw more rapidly when subjected to microwave energy.

A further problem that persists is to provide composition for the treatment of food products so that they thaw more evenly when subjected to microwave energy.

A further problem is also the formation of hotspots and their influence on the texture of food products. The hotspots most often have an adverse effect on food texture.

The present invention addresses/alleviates problems of the prior art.

Use of a composition for absorbing microwave energy in a frozen foodstuff characterised in that when present in a frozen foodstuff the composition comprises at least an amount of unfrozen water and wherein the composition comprises a mesophase of
(i) water;
(ii) an emulsifier;
and comprises less than 25 % w/w of oil.

According to a first aspect, the invention relates to use of a composition for absorbing microwave energy in a frozen foodstuff characterised in that when present in a frozen foodstuff the composition comprises at least an amount of unfrozen water and wherein the composition comprises a mesophase of
(i) water;
(ii) an emulsifier;
and comprises less than 25 % w/w of oil.

The word mesophases herein includes both layered structures and traditional mesophases i.e. lamellar, cubic, hexagonal (1 and 2), L2 and L1 and also dispersed mesophases i.e. liposomes, cubosomes and hexosomes. Additionally, it includes the formation of micelles, which will also form such surfaces.

Surprisingly, it has been found that a frozen food product comprising a composition for use according to the invention may be thawed uniformly and rapidly by the application of direct microwave energy, without the necessity of using intermittent or pulsed microwaves. Without wishing to be limited by any such theory, it is postulated that the unfrozen water behaves as a receiver of microwave energy, and as such enables the energy to be substantially uniformly absorbed by the frozen food product.

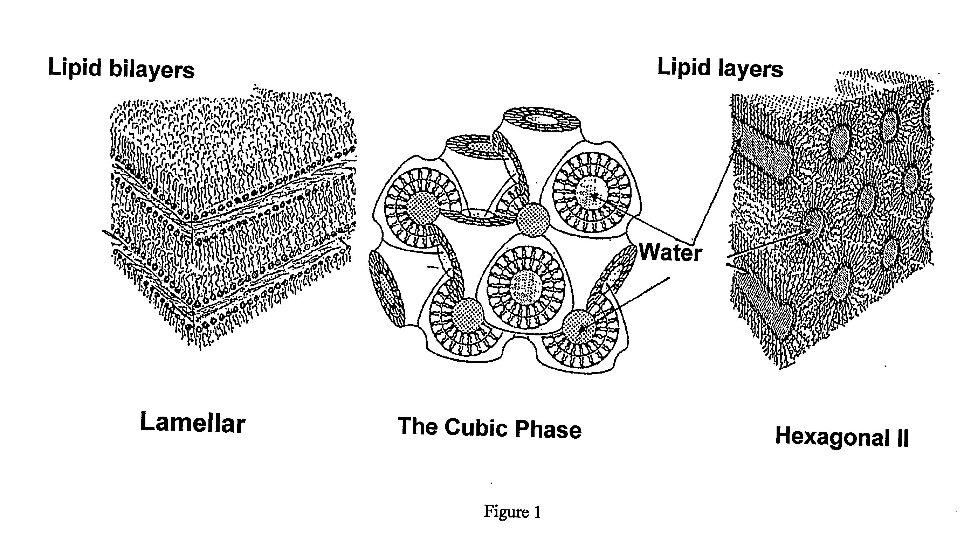

It is believed that the ability of the systems for use in the present invention to maintain a proportion of unfrozen water when present in a frozen foodstuff is due to the ability of the compositions to form mesophases. Mesophases are structures where the polar emulsifier and water are organised in a well-defined structure according to their polarity. The polar end group of the emulsifier is in contact with the water phase or phases. A number of different mesophase structures are believed to exist (Figure 1). The water close to the polar end group of the emulsifier is organised in such a way that it is protected from freezing.

For ease of reference, these and further aspects of the present invention are now discussed under appropriate section headings. However, the teachings under each section are not necessarily limited to each particular section.

### Water/Emulsifier.

The ratio of water to emulsifier for use the composition of the invention will depend on the emulsifier used, and the particular application of the composition. It has been found that for any particular emulsifier/water system, the amount of liquid water present below 0°C ("unfrozen water") tends to increase with the proportion of water up to a maximum. Up to this maximum point, it is thought that substantially all the water in the system is unfrozen. Beyond this point, a fixed amount of the water present is unfrozen, with the balance frozen.

Preferably, the compositions for use in the invention comprise at least an amount of unfrozen water when present in a frozen foodstuff at a temperature of -15°C or below. Preferably, the compositions for use in the invention comprise at least an amount of unfrozen water when present in a frozen foodstuff at a temperature of -20 °C or below. Preferably, the compositions for use in the invention comprise at least an amount of unfrozen water when present in a frozen foodstuff at a temperature of about -25 °C. Preferably, the compositions for use in the invention comprise at least an amount on unfrozen water when present in a frozen foodstuff at a temperature of about -40 °C.

When present in a frozen foodstuff, the compositions for use in the present invention preferably comprise an amount of unfrozen water that is thermodynamically stable at temperatures below 0 °C.

Preferably, the water component is present in an amount of at least 0.1 % based on the total weight of the composition. Preferably, the water component is present in an amount of at least 1 % based on the total weight of the composition. Preferably, the water component is present in an amount of at least 2 % based on the total weight of the composition. Preferably, the water component is present in an amount of at least 3 % based on the total weight of the composition. Preferably, the water component is present in an amount of at least 5 % based on the total weight of the composition. Preferably, the water component is present in an amount of at least 10 % based on the total weight of the composition.

Preferably, the water component is present in an amount of at most 99.9 % based on the total weight of the composition. Preferably, the water component is present in an amount of at most 50 % based on the total weight of the composition. Preferably, the water component is present in an amount of at most 40 % based on the total weight of the composition. Preferably, the water component is present in an amount of at most 30 % based on the total weight of the composition. Preferably, the water component is present in an amount of at most 25 % based on the total weight of the composition.

Preferably, the water component is present in an amount of between 0.1 and 99.9 % based on the total weight of the composition. More preferably, the water component is present in an amount of between 1 and 25 % based on the total weight of the composition

Preferably, the emulsifier is present in an amount of at least 0.1 % based on the total weight of the composition. Preferably, the emulsifier is present in an amount of at least 50 % based on the total weight of the composition. Preferably, the emulsifier is present in an amount of at least 60 % based on the total weight of the composition. Preferably, the emulsifier is present in an amount of at least 70 % based on the total weight of the composition. Preferably, the emulsifier is present in an amount of at least 80 % based on the total weight of the composition. Preferably, the emulsifier is present in an amount of at least 99.0 % based on the total weight of the composition. Preferably, the emulsifier is present in an amount of at least 99.9 % based on the total weight of the composition.

Preferably, the emulsifier is present in an amount up to 99.9 % based on the total weight of the composition. Preferably, the emulsifier is present in an amount up to 99 % based on the total weight of the composition. Preferably, the emulsifier is present in an amount up to 97 % based on the total weight of the composition. Preferably, the emulsifier is present in an amount up to 95 % based on the total weight of the composition. Preferably, the emulsifier is present in an amount up to 90 % based on the total weight of the composition.

Preferably, the emulsifier is present in an amount of between 0.1 and 99.9 % based on the total weight of the composition. More preferably, the emulsifier is present in an amount of between 75and 90 % based on the total weight of the composition.

The composition comprises less than 25% w/w of oiL More preferably, the composition comprises less than 10 % w/w of oil. More preferably, the composition comprises less than 5 % w/w of oil. More preferably, the composition comprises less than 1 % w/w of oil. Still more preferably the composition comprises less than 0.1 % w/w of oil. Most preferably, the composition comprises substantially no oil.

Preferably, the composition for use in the invention comprises
(i) water in an amount of between 0.1 and 99.9%; and
(ii) emulsifier in an amount of between 0.1 and 99.9% by weight.

More preferably, the composition for use in the invention comprises
(i) water in an amount of between 10 and 25%; and
(ii) emulsifier in an amount of between 75 and 70% by weight.

Other components may also be present in the compositions for use in the invention, provided that they do not affect the ability to retain at least an amount of unfrozen water when present in a frozen foodstuff.

An example of a technique of bringing into association is mixing. Mixing of water with an emulsifier may be achieved by any one of a number of means that will be apparent to one skilled in the art. Mixing in an electric mixer is one example.

If ingredients additional to emulsifier and water are present in the composition, then these may be incorporated at any appropriate stage.

### Foodstuff

Preferably, the foodstuff comprises an amount of the composition sufficient that the amount of unfrozen water present in the foodstuff as a whole enables uniform and rapid microwave thawing. In practice, this equates to an amount of at least 0.1 % w/w of unfrozen water present in the foodstuff as a whole.

The usage level will depend on the specific food product, the application and how much water that will be needed to preserve the food texture after freezing.

An amount of non frozen water as low as around 0.1% of the total product gives a product that rapidly and uniformly thaws when heated in a microwave oven. This even thawing results in food products with improved textural properties. To obtain 0.1% of unfrozen water according to this invention takes approximately 0.20% of PGE. The exact amount of emulsifier will depend on the nature of the emulsifier, and may readily be determined by one skilled in the art. For example, 0.14% of Dimodan® MO90 or 0.34% of Grindsted® PGE O70 (Danisco, Denmark) will produce the same effects.

Preferably, the foodstuff comprises the composition for use in the invention in an amount of at least 0.1 % w/w. Preferably, the foodstuff comprises the composition for use in the invention in an amount of at least 0.2 % w/w. Preferably, the foodstuff comprises the composition for use in the invention in an amount of at least 0.3 % w/w. Preferably, the foodstuff comprises the composition for use in the invention in an amount of at least 0.4 % w/w. Preferably, the foodstuff comprises the composition for use in the invention in an amount of at least 0.5 % w/w.

Preferably, the foodstuff comprises the composition for use in the invention in an amount of less than 10 % w/w. Preferably, the foodstuff comprises the composition for use in the invention in an amount of less than 5 % w/w. Preferably, the foodstuff comprises the composition for use in the invention in an amount of less than 4 % w/w. Preferably, the foodstuff comprises the composition for use in the invention in an amount of less than 3 % w/w.

Preferably, the foodstuff comprises the composition for use in the invention in an amount of between 0.1 and 5 % w/w, more preferably between 0.5 and 3 % w/w.

The mode of application of the composition for use in the invention to the foodstuff will depend on the nature of foodstuff in question. For instance, if the foodstuff is liquid or semiliquid at ambient temperature, the composition may be incorporated simply by mixing it with the foodstuff.

In some embodiments of the invention, the water and emulsifier may be added to the foodstuff separately. Water may be added followed by emulsifier, alternatively emulsifier may be added, followed by water.

It is preferred that the emulsifier and water are combined before addition to the foodstuff.

Alternatively, the composition may be incorporated at any point during the food preparation process. For example, the composition may be sprayed on to the surface of the foodstuff. The composition may be injected in to the foodstuff (e.g. in the case of poultry, meat or fish). The skilled person will be able to judge when to best achieve this incorporation.

Preferably, the foodstuff is selected from low fat spread, mayonnaise, yoghurt, bakery fillings, margarine, reconstituted fruits, jams, fruit preparations, fruit fillings, ripples, fruit sauces, stewed fruit, coffee whitener, instant fruit dessert, confectionery (such as marsh mallow), potato based foods (such as chips, french fries and croquettes), prepared meals (such as casseroles and stews) and fine foods (such as dressings including salad dressings; ketchup, vinaigrette dressings and soups). The foodstuff may be a beverage, raw, processed or pasteurised foods including raw meat, cooked meat, raw poultry products, cooked poultry products, raw seafood products, cooked seafood products, [raw or cooked meat, poultry and seafood products], sausages, frankfurters, ready to eat meals, pasta sauces, pasteurised soups, marinades, oil-in-water emulsions, water-in-oil emulsions, cheese spreads, processed cheese, dairy desserts, flavoured milks, cream, fermented milk products, cheese, butter, condensed milk products, cheese spreads, pasteurised liquid egg" ice cream mixes, soya products, pasteurised liquid egg), confectionery products, fruit products, and foods with fat-based or water-containing fillings. The foodstuff may be a bakery product such as bread, cakes, fine bakery and dough.

### Emulsifier

The term "emulsifier" as used herein refers to any substance that has the ability to stabilise an emulsion of water and a water-immiscible liquid.

Preferred emulsifiers are partially esterified polyhydric compounds having surface active properties. This class of emulsifiers includes among others, mono- and diglycerides, and mono-diglycerides of fatty acids, such as monopalmitin, monostearin, monoolein, and dipalmitin, and the carboxylic (eg acetic) esters thereof; partial fatty esters of glycols or polyglycerol esters ("PGE's"), such as propylene glycol monostearate and monobehenate; higher fatty acid esters of sugars, such as sucrose and sorbitol; and phosphoric and sulfuric acid esters, such as dodecyl glyceryl ether sulfate and monostearin phosphate. Other examples include the partial esters of hydroxy carboxylic acids, such as lactic, citric, and tartaric acids with polyhydric compounds, such as mono- and diglycerides, and mono-diglycerides of fatty acids for example glyceryl lactopalmitate, and the polyoxyethylene ethers of fatty esters of polyhydric alcohols, such as a polyoxyethylene ether of sorbitan monostearate or distearate. Further examples are diacetyl tartaric acid esters of mono-and di-glycerides of fatty acids ("DATEMS"). Fatty acids alone or esterified with a hydroxy carboxylic acid, e.g., stearyl-2-lactylate, are also suitable. Preferably, the emulsifier is edible.

Particularly preferred emulsifiers are those that are defined by the formula (I) 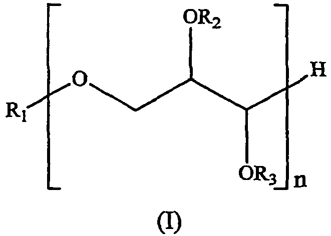 wherein R₁, R₂ and R₃ are independently selected from H, a lipophilic acyl group, and a hydrophilic acyl group; and
at least one of R₁, R₂ and R₃ is a lipophilic acyl group; and
at least one of R₁, R₂ and R₃ is H or a hydrophilic acyl group; and
n is an integer.

Preferred lipophilic acyl groups are branched lipophilic acyl groups.

Preferred lipophilic acyl groups are those derived from fatty acids.

Preferred hydrophilic acyl groups are those derived from citric acid, lactic acid, acetic acid, tartaric acid and acetylated tartaric acid.

Particularly preferred emulsifiers for use in the invention comprise one or more polyglycerol esters of fatty acids. Preferably, at least an amount of the fatty acid is unsaturated. Preferably, at least an amount of the polyglycerol ester is a diglycerol ester. Very preferably, the emulsifier comprises a diglycerol ester of a C18:1 fatty acid.

In one preferred aspect, the compositions of the invention are present in encapsulated form. The skilled person will be able to determine suitable methods for encapsulation of the compositions.

The present invention provides the use of a composition of the invention for absorbing microwave energy in a frozen foodstuff

### Freeze Protection

As used herein, the term "freeze protection" refers to a process the result of which is to confer on a material (e.g. a foodstuff) the quality of containing at least an amount of unfrozen water when at equilibrium at a temperature of below 0 °C, preferably below -40°C °C, more preferably below -20 °C, still more preferably at about -25 °C, most preferably down to -40°C,.

### BRIEF DESCRIPTION OF THE FIGURES

The present invention will be described in further detail by way of example only with reference to the accompanying figures in which:-
Figure 1 shows the structure of mesophases;
Figure 2 is a graph;
Figure 3 is a graph; and
Figure 4 is a graph.

The present invention will now be described in further detail in the following examples.

### EXAMPLES

### Example 1

A composition for use according to the invention is prepared by mixing water with polyglycerol esters of fatty acids (PGE 070, available from Danisco Ingredients, Denmark).

### Example 2

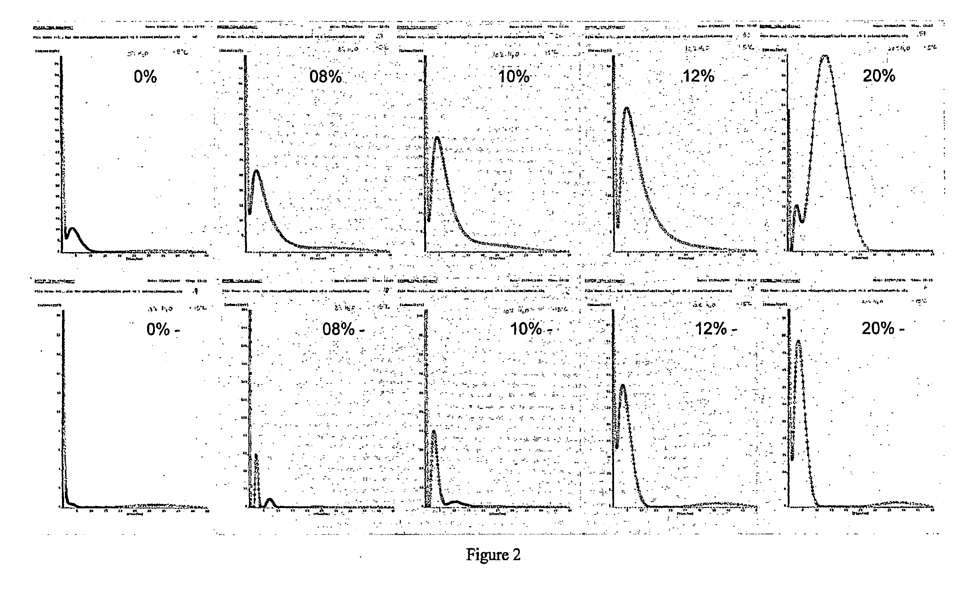

The nuclear magnetic spectra (T2) of the compositions of Example 1 were recorded at 5°C and -15°C. Figure 2 shows these results.

### Example 3

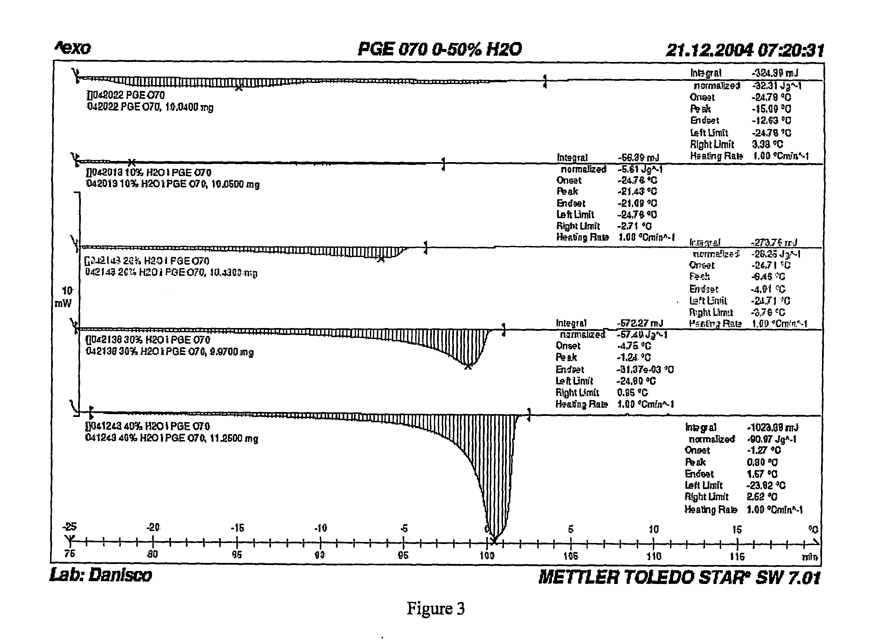

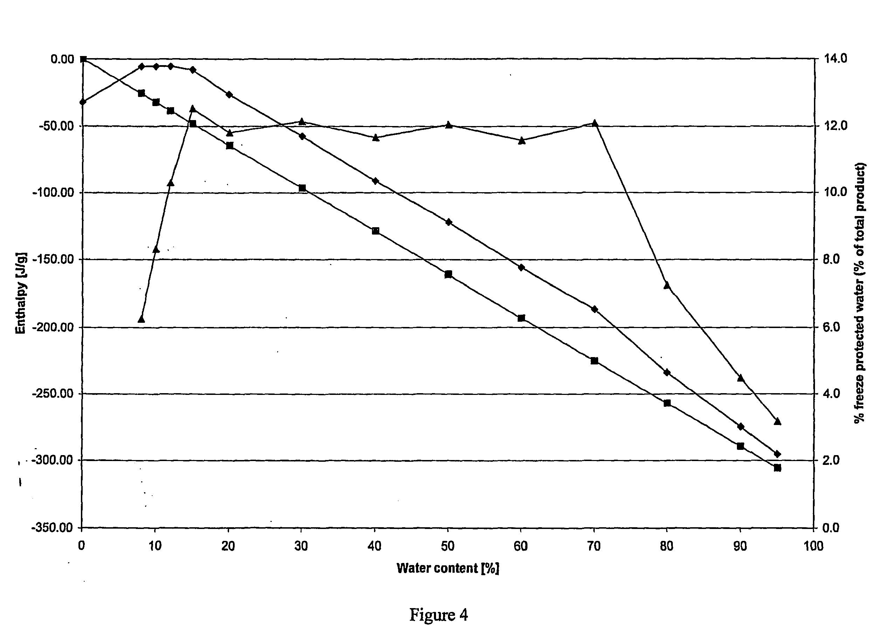

Differential scanning calorimetry was conducted on the compositions of Example 1. These results are shown in Figures 3 and 4.

Referring to figure 4, the square (■) represents a theoretical value indicating that all the available water is frozen (left hand scale). The diamonds (0) represent the measured values (left hand scale). The triangles (▲) represent the difference between the theoretical and measured values. The difference has been rescaled to represent the amount in % of freeze protected water (right hand scale).

### Example 4: Water and polyglycerol esters

Pure mixtures of water and emulsifiers have been tested. In this example the emulsifiers are polyglycerol esters (PGE) tested with various combinations of chain length of the fatty acid part of the emulsifier and various di-, tri-, tetra-, and polyglycerol contents. The results support that part of the water is unfrozen at a temperature of -25°C. The mixture have been tested for use in a wide range (between 0 and 100%) of concentrations of emulsifier. At high emulsifier concentrations there is not enough water to form a complete monolayer throughout the entire emulsifier surface. Though the availably water will exist in a monolayer and therefore all of it is unfrozen. At higher amounts of water the excess water, which has proved to be the water above 15% (w/w) when using PGE, will freeze at these conditions. This corresponds well with the assumption that about 1 monolayer of water pr. surface area is structured and thereby unfrozen.

The samples have been stored both at -25°C, at room temperature (22°C), at elevated temperature (40°C) and at high temperature (60°C) for months. All these samples kept their freeze protecting properties.

### Example 4a

85% polyglycerol ester based on a narrow short chained polyol distribution consisting of mainly di-, but also tri- and tetraglycerols and a fatty acid mixture dominated by oleic acid was mixed with 15% water at room temperature by means of a propeller agitator. The sample was allowed to equilibrate for a few days during which a clear lamellar structure was formed. The lamellar structure was confirmed by polarised brightfield microscopy.

The amount of unfrozen water was analysed on DSC by cooling the sample to 25°C for 30 min and heating it to 20°C during which the melting enthalpy of frozen water was measured. The results show that 85 % of the water was unfrozen. The DSC results were confirmed by NMR results that were produced using FID (Free induction decay). By FID the amount of unfrozen water was measured directly at -25°C, -20°C, -15°C, -10°C, -5°C, 0°C and +5°C. Furthermore the water activity of the samples was measured at 22°C. The result supports that part of the water is strongly bound by the emulsifier.

### Example 4b

A sample consisting of 50% water and 50% polyglycerol ester as described in example 4a was prepared, analysed and tested according to example 4a. The structure of the sample now changes from a lamellar system as in example 4a to a liposome dispersion identified by polarised brightfield microscopy. The results show that 34.2% of the water was unfrozen.

### Example 4c

A sample consisting of 70% water and 30% polyglycerol ester as described in example 4a was prepared, analysed and tested according to example 4a. The structure was as described in example 4b. The results show that 18% of the water was unfrozen.

### Example 4d

A sample consisting of 95% water and 5% polyglycerol ester as described in example 4a was prepared, analysed and tested according to example 4a. The structure was as described in example 4b. The results show that 5% of the water was unfrozen.

### Example 4e

A sample was prepared with 85% polyglycerol ester with 10% less diglycerol as in example 4a and 15% water. The sample was prepared, analysed and tested as described in 4a. The structure was as described in example 4a. The results show that 84% of the water was unfrozen.

### Example 4f

A sample was prepared with 5% polyglycerol ester from example 4e and 95% water. The sample was prepared, analysed and tested as described in 4a. The structure was as described in example 4b. The results show that 3% of the water was unfrozen.

### Example 4g

Samples 4b-4d were stored two weeks at -18°C and then reconditioned at room temperature before it was analysed as in Example 4a. The amount of unfrozen water were similar to the one obtained in the respective examples 4b-4d.

### Example 5: Water and monoglycerides

Pure mixtures of water and emulsifiers have been tested. The emulsifiers are mono and diglycerol esters, tested with various combination of chain length of the fatty acid part of the emulsifier. The results support that part of the water is unfrozen at a temperature of-25°C. The mixtures have been tested for use of a wide range (between 0 and 100%) of concentrations of emulsifier. At high concentrations of emulsifier there is not enough water to stabilize a monolayer of the entire emulsifier surface. Therefore all the water is unfrozen. At higher amounts of water the excess water above 15% will freeze at these conditions. This corresponds well with the assumption that about 1 monolayer of water pr. surface area is structured and thereby unfrozen.

The samples have been stored both at -25°C, at room temperature (22°C), at elevated temperature (40°C) and at high temperature (60°C) for months. All these samples kept the freeze protecting properties.

A specific example is found in Example 5a.

### Example 5a

A sample based on 60% emulsifier of the type distilled monoglycerides with a fatty acid distribution dominated by oleic acid and 40% water. The sample was prepared by heating it to 60°C for 30 min followed by storage for a few days at room temperature. The structure of the sample was confirmed to be cubic mesophase. The sample was analysed as described in example 8a and the amount of unfrozen water was found to be 45%.

### Example 6: Emulsions

Combinations of emulsifier, water and oil have been mixed into oil in water emulsions. The tests support the fact that the above described mesophases retain their freeze protecting properties and therefore can be used in emulsified food systems.

The effect in emulsions was tested on systems that were mixed by three different energy inputs. This was gentle mixing (propeller mixing), medium mixing (Ultra Turrax® T25 mounted with dispersing tool S25KR-18G at 8000 rpm) and hard mixing (homogenized at 1000 Bar). The freeze protection in these experiments showed no difference, which supports that the structured system of the emulsifier is stable to mechanical processing and therefore well suited for processed food.

Specific examples are found in Examples 6a-6c.

### Example 6a

A oil in water emulsion was prepared by use of 90% of the sample from Example 4b and 10% of liquid oil containing 1% of medium HLB value emulsifier. The oil phase was gently incorporated into the sample from 4b by use of a propeller mixer. The liposome structure from Example 4b was unaffected by the addition of the oil phase and amount of unfrozen water was analysed as described in Example 4a to be 32% after correcting for the enthalpy change during cooling of the sample due the addition of the liquid oil.

### Example 6b

A sample prepared as in 6a was made with the only difference that the mixing procedure was changed from gentle to medium intensity by use of an Ultra Turrax® T25 mounted with dispersing tool S25KR-18G at 8000 rpm. The amount of unfrozen water was 34%.

### Example 6c

A sample prepared as in 6a was made with the only difference that the mixing procedure was changed from gentle to high intensity by homogenisation at 1000 Bar . The amount of unfrozen water was 34%.

### Example 7 Complex food systems

The effect of the structured emulsifiers was tested in complex food systems. Besides water and the relevant emulsifier the systems consisted of combinations of oil, protein, hydrocolloids, sugars, minerals, emulsifiers as well as flavours and other relevant food ingredients and materials. The emulsifier systems showed the same efficiency in these complex systems as they had shown the parallel systems of pure water and emulsifier.

A specific example is found in Example 7a.

### Example 7a

50% of the sample from Example 6a was mixed with 50% of skim milk. The sample was analysed according to Example 4a. The amount of unfrozen water was 10%.

Various modifications and variations of the described methods and system of the invention will be apparent to those skilled in the art without departing from the scope of the invention. Although the invention has been described in connection with specific preferred embodiments, it should be understood that the invention as claimed should not be unduly limited to such specific embodiments. Indeed, various modifications the described modes for carrying out the invention which are obvious to those skilled in chemistry or related fields are intended to be within the scope of the following claims.

## Claims

1. Use of a composition for absorbing microwave energy in a frozen foodstuff **characterised in that** when present in a frozen foodstuff the composition comprises at least an amount of unfrozen water and wherein the composition comprises a mesophase of
(i) water;
(ii) an emulsifier;
and comprises less than 25 % w/w of oil.

2. A use according to claim 1 wherein the composition comprises:
(i) water in an amount of between 0.1 and 99.9%; and
(ii) emulsifier in an amount of between 0.1 and 99.9% by weight.

3. A use according to any preceding claim wherein the composition comprises substantially no oil.

4. A use according to any preceding claim wherein the composition consists essentially of emulsifier and water.

5. A use according to any preceding claim wherein the emulsifier comprises one or more polyglycerol esters of fatty acids.

6. A use according to any preceding claim wherein the emulsifier is selected from one or more polyglycerol esters of fatty acids.

7. A use according to any preceding claim wherein the emulsifier comprises a polyglycerol ester of an unsaturated fatty acid.

8. A use according to any preceding claim wherein the emulsifier comprises a diglycerol ester of fatty acids.

9. A use according to any preceding claim wherein the emulsifier comprises a diglycerol ester of a C 18:1 1 fatty acid.

10. A use according to any preceding claim wherein the emulsifier comprises one or more monoglycerides of fatty acids.

11. A use according to any claim 10 wherein the emulsifier is selected from one or more monoglycerides of fatty acids.

12. A use according to any preceding claim wherein the emulsifier comprises a monoglyceride of fatty acids.

13. A use according to any preceding claim wherein the emulsifier comprises a monoglyceride of an unsaturated fatty acid.

14. A use according to any preceding claim wherein the emulsifier comprises a monoglyceride of a C 18:1 fatty acid.

15. A use according to any preceding claim wherein the composition comprises at least an amount of liquid water when present in a frozen foodstuff at equilibrium.

16. A use according to any preceding claim wherein the composition comprises at least an amount of liquid water when present in a frozen foodstuff at below -10 ° C.

17. A use according to any preceding claim wherein the composition comprises at least an amount of liquid water when present in a frozen foodstuff at below -20 ° C.

18. A use as claimed in any one of claims 1 to 17 wherein the composition is in encapsulated form.

## Patentansprüche

1. Verwendung einer Zusammensetzung zum Absorbieren von Mikrowellenenergie in einem gefrorenen Nahrungsmittel, **dadurch gekennzeichnet, dass** die Zusammensetzung, wenn sie in einem gefrorenen Nahrungsmittel vorhanden ist, mindestens eine Menge ungefrorenen Wassers umfasst, und wobei die Zusammensetzung eine Mesophase
(i) Wasser;
(ii) eines Emulgators
umfasst;
und weniger als 25 Gew./Gew.-% Öl umfasst.

2. Verwendung nach Anspruch 1, wobei die Zusammensetzung Folgendes umfasst:
(i) Wasser in einer Menge zwischen 0,1 und 99,9 % und
(ii) Emulgator in einer Menge zwischen 0,1 und 99,9 Gew.-%.

3. Verwendung nach einem vorherigen Anspruch, wobei die Zusammensetzung im Wesentlichen kein Öl umfasst.

4. Verwendung nach einem vorherigen Anspruch, wobei die Zusammensetzung im Wesentlichen aus Emulgator und Wasser besteht.

5. Verwendung nach einem vorherigen Anspruch, wobei der Emulgator mindestens einen Polyglycerinester von Fettsäuren umfasst.

6. Verwendung nach einem vorherigen Anspruch, wobei der Emulgator aus mindestens einem Polyglycerinester von Fettsäuren ausgewählt ist.

7. Verwendung nach einem vorherigen Anspruch, wobei der Emulgator einen Polyglycerinester einer ungesättigten Fettsäure umfasst.

8. Verwendung nach einem vorherigen Anspruch, wobei der Emulgator einen Diglycerinester von Fettsäuren umfasst.

9. Verwendung nach einem vorherigen Anspruch, wobei der Emulgator einen Diglycerinester einer C18:1-Fettsäure umfasst.

10. Verwendung nach einem vorherigen Anspruch, wobei der Emulgator mindestens ein Monoglycerid von Fettsäuren umfasst.

11. Verwendung nach Anspruch 10, wobei der Emulgator aus mindestens einem Monoglycerid von Fettsäuren ausgewählt ist.

12. Verwendung nach einem vorherigen Anspruch, wobei der Emulgator ein Monoglycerid von Fettsäuren umfasst.

13. Verwendung nach einem vorherigen Anspruch, wobei der Emulgator ein Monoglycerid einer ungesättigten Fettsäure umfasst.

14. Verwendung nach einem vorherigen Anspruch, wobei der Emulgator ein Monoglycerid einer C18:1-Fettsäure umfasst.

15. Verwendung nach einem vorherigen Anspruch, wobei die Zusammensetzung mindestens eine Menge flüssigen Wassers umfasst, wenn sie im Gleichgewicht in einem gefrorenen Nahrungsmittel vorhanden ist.

16. Verwendung nach einem vorherigen Anspruch, wobei die Zusammensetzung mindestens eine Menge flüssigen Wassers umfasst, wenn sie bei unter -10 °C in einem gefrorenen Nahrungsmittel vorhanden ist.

17. Verwendung nach einem vorherigen Anspruch, wobei die Zusammensetzung mindestens eine Menge flüssigen Wassers umfasst, wenn sie bei unter -20 °C in einem gefrorenen Nahrungsmittel vorhanden ist.

18. Verwendung nach einem der Ansprüche 1 bis 17, wobei die Zusammensetzung in eingekapselter Form vorliegt.

## Revendications

1. Utilisation d'une composition pour absorber de l'énergie micro-ondes dans un aliment congelé, **caractérisée en ce que**, lorsqu'elle est présente dans un aliment congelé, la composition comprend au moins une quantité d'eau non congelée et **en ce que** la composition comprend une mésophase constituée
(i) d'eau ;
(ii) d'un agent émulsifiant ;
et comprend moins de 25 % m/m d'huile.

2. Utilisation selon la revendication 1, dans laquelle la composition comprend :
(i) de l'eau en une quantité dans la plage de 0,1 à 99,9% ; et
(ii) un agent émulsifiant en une quantité dans la plage de 0,1 à 99,9% en poids.

3. Utilisation selon l'une quelconque des revendications précédentes, dans laquelle la composition ne comprend pratiquement pas d'huile.

4. Utilisation selon l'une quelconque des revendications précédentes, dans laquelle la composition est essentiellement constituée d'un agent émulsifiant et d'eau.

5. Utilisation selon l'une quelconque des revendications précédentes, dans laquelle l'agent émulsifiant comprend un ou plusieurs esters polyglycéroliques d'acides gras.

6. Utilisation selon l'une quelconque des revendications précédentes, dans laquelle l'agent émulsifiant est choisi parmi un ou plusieurs esters polyglycéroliques d'acides gras.

7. Utilisation selon l'une quelconque des revendications précédentes, dans laquelle l'agent émulsifiant comprend un ester polyglycérolique d'un acide gras insaturé.

8. Utilisation selon l'une quelconque des revendications précédentes, dans laquelle l'agent émulsifiant comprend un ester diglycérolique d'acides gras.

9. Utilisation selon l'une quelconque des revendications précédentes, dans laquelle l'agent émulsifiant comprend un ester diglycérolique d'un acide gras en C18:1.

10. Utilisation selon l'une quelconque des revendications précédentes, dans laquelle l'agent émulsifiant comprend un ou plusieurs monoglycérides d'acides gras.

11. Utilisation selon la revendication 10, dans laquelle l'agent émulsifiant est choisi parmi un ou plusieurs monoglycérides d'acides gras.

12. Utilisation selon l'une quelconque des revendications précédentes, dans laquelle l'agent émulsifiant comprend un monoglycéride d'acides gras.

13. Utilisation selon l'une quelconque des revendications précédentes, dans laquelle l'agent émulsifiant comprend un monoglycéride d'un acide gras insaturé.

14. Utilisation selon l'une quelconque des revendications précédentes, dans laquelle l'agent émulsifiant comprend un monoglycéride d'un acide gras en C18:1.

15. Utilisation selon l'une quelconque des revendications précédentes, dans laquelle la composition comprend au moins une quantité d'eau liquide lorsqu'elle est présente dans un aliment congelé à l'équilibre.

16. Utilisation selon l'une quelconque des revendications précédentes, dans laquelle la composition comprend au moins une quantité d'eau liquide lorsqu'elle est présente dans un aliment congelé à une température inférieure à -10° C.

17. Utilisation selon l'une quelconque des revendications précédentes, dans laquelle la composition comprend au moins une quantité d'eau liquide lorsqu'elle est présente dans un aliment congelé à une température inférieure à -20° C.

18. Utilisation selon l'une quelconque des revendications 1 à 17, dans laquelle la composition se présente sous une forme encapsulée.
